# EUROPÄISCHE PATENTANMELDUNG

(11) **EP 1 152 276 A1**
(43) Veröffentlichungstag der Anmeldung: **07.11.2001**
(21) Anmeldenummer: 01109510.6
(22) Anmeldetag: 17.04.2001
(51) Int. Cl.: G02B 23/24, A61B 1/002, G02B 1/02, A61B 1/00

(54) **Endoskopoptik**

(30) Priorität: 02.05.2000 DE 20007875 U
(71) Anmelder: OLYMPUS WINTER & IBE GmbH, 22045 Hamburg (DE)
(72) Erfinder: Förster, Thomas, 23879 Mölln (DE)
(74) Vertreter: Schaefer, Konrad, Dipl.-Phys.

(57) **Zusammenfassung**

Die Erfindung betrifft eine Endoskopoptik mit einem starren Schaft (11), in dessen distalem Endbereich ein Objektiv (13) und in dem weiterhin eine Bildübertragungseinrichtung vorgesehen ist, die zur Übertragung zwischen dem distalen Objektiv und einer im proximalen Bereich der Endoskopoptik vorgesehenen Bildbetrachtungseinrichtung dient, wobei die Bildübertragungseinrichtung aus mehreren im Schaft beabstandet zu einander angeordneten optischen Linsen (14,15,16) besteht, und ist dadurch gekennzeichnet, daß mindestens eine der Linsen (14,16) der Bildübertragungseinrichtung aus Saphir besteht.

## Beschreibung

Die Erfindung bezieht sich auf eine Endoskopoptik nach dem Oberbegriff des Anspruches 1.

Gattungsgemäße Endoskopoptiken enhalten eine proximale Bildbetrachtungseinrichtung, z.B. ein Okular oder eine Kamera, und einen rohrförmigen Schaft, in dessen distalem Endbereich ein Objektiv angeordnet ist.

Zur Übertragung zwischen Objektiv und Bildbetrachtungseinrichtung dient eine Bildübertragungseinrichtung, die aus mehreren im Schaft im Abstand zueinander angeordneten optischen Linsen, in aller Regel Stablinsen, besteht.

Für viele Anwendungsfälle werden Endoskopoptiken mit möglichst geringem Schaftdurchmesser gewünscht. Bei solchen dünnen Optiken, aber auch generell bei Endoskopoptiken, stellt sich das Problem, daß die für die Bildübertragungseinrichtung verwendeten Linsen aufgrund ihrer speziellen Abmessungen leicht beschädigt werden können. Schon geringe Stoß- oder Biegebelastungen des Schaftes können dazu führen, daß die Linsen brechen oder aussplittern. Eine Reparatur ist sehr aufwendig und in den meisten Fällen muß der Schaft insgesamt ausgetauscht werden.

Aufgabe der Erfindung ist es, ausgehend vom Stand der Technik, Endoskopoptiken zu schaffen, deren Bildübertragungseinrichtungen deutlich stabiler als bei herkömmlichen Optiken sind.

Gelöst wird die Aufgabe mit einer Endoskopoptik, die die kennzeichnenden Merkmale des Anspruches 1 aufweist.

Bevorzugte Ausgestaltungen sind in den Unteransprüchen angegeben.

Erfindungsgemäß ist vorgesehen, daß die optischen Elemente des Bildübertragungssystems ganz oder teilweise aus Saphir hergestellt sind.

Gegenüber herkömmlichem optischen Glas hat Saphir eine ganze Reihe von Vorteilen. Ein wesentlicher Vorteil ist seine mechanische Belastbarkeit, die im Vergleich zu herkömmlichen optischen Glassorten zu einer deutlich verbesserten Bruch- und Splitterfestigkeit führt.

Saphir hat weiterhin einen relativ hohen Brechungsindex. Es lassen sich aus Saphir mit relativ geringem Aufwand Linsen herstellen, die eine gute Abbildungsqualität besitzen. Außerdem lassen sich durch einfache Anti-Reflex-Beschichtung Linsen mit spektralen Transmissionseigenschaften in einem breiten Wellenlängenbereich herstellen.

Aus der WO 99/19752 sind Endoskopoptiken bekannt, bei denen die distalen Objektive aus Saphir hergestellt sind. Die Verwendung von Saphir erfolgte, um die optischen Eigenschaften des Objektivs zu verbessern. Für die Linsen der Bildübertragungseinrichtungen wird dagegen bei den in der WO 99/19752 beschriebenen Endoskopoptiken das üblicherweise eingesetzte optischen Glas verwendet, das die oben beschriebenen Nachteile aufweist.

In herkömmlichen und auch den erfindungsgemäßen Bildübertragungseinrichtungen sind in aller Regel mehrere Stablinsen vorgesehen, mit denen der Bildtransport über einen Großteil des optischen Weges durch den Schaft erfolgt. Die Dikke der Stablinsen beträgt dabei ein mehrfaches ihres Durchmessers, was ihre spezielle Empfindlichkeit gegen mechanische Belastungen erklärt.

Neben den erwähnten Stablinsen können zusätzlich eine bzw. mehrere optische Korrekurlinsen im Übertragungsweg vorgesehen sein, die zur Kompensation eventueller Farbfehler oder dergleichen dienen. Diese Korrekturlinsen sind aus einem anderen Glas hergestellt als die Stablinsen und besitzen eine deutlich geringere Dicke.

Gemäß einer bevorzugten Ausgestaltung der Erfindung ist daher vorgesehen, daß bei Endoskopoptiken, deren Bildübertragungseinrichtungen mehrere unterschiedliche Sorten von Linsen aufweisen, nur die aufgrund ihrer geometrischen Abmessungen besonders bruch- und splitterempfindlichen Stablinsen aus Saphir hergestellt sind, während die zur eventuellen Fehlerkompensationen in dem Übertragungsweg vorgesehenen Korrekturlinsen, die weniger anfällig sind, aus einem anderem optischen Glas bestehen.

Denkbar ist aber selbstverständlich auch, daß nur die optischen Elemente die sich in einem besonders stark mechanisch beanspruchten Abschnitt des Schaftes befinden aus Saphir hergestellt sind oder dergleichen.

Denkbar ist auch, daß in der Bildübertragungseinrichtung Verbundlinsen eingesetzt werden aus z.B. einer plankonvexen Linse mit hoher Dicke, die aus Saphir besteht und einer weiteren plankonvexen Linse mit geringer Dicke, die aus einem anderen Glas besteht, wobei die beiden Linsen mit ihren planen Flächen aneinanderanliegend verbunden, z.B. verklebt, sind.

Die Erfindung ist diesbezüglich nicht auf spezielle Ausgestaltungen eingeschränkt.

Im folgenden soll die Erfindung anhand einer Abbildung, die ein Ausführungsbeispiel beschreibt näher erläutert werden:

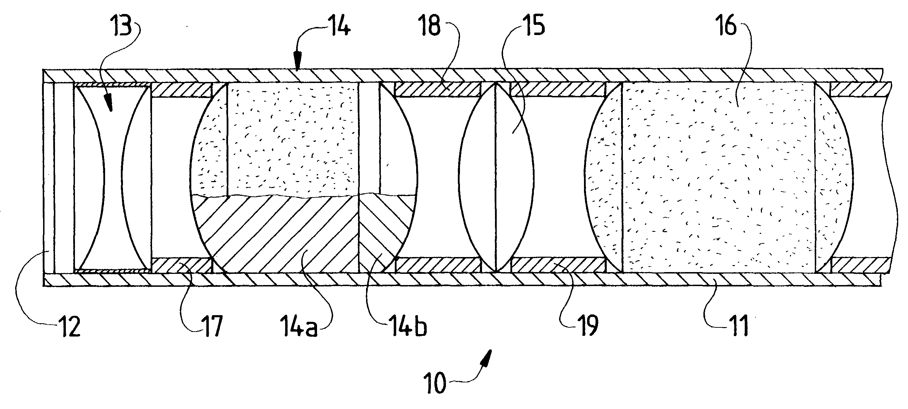

In der Abbildung ist schematisch der distale Endbereich eines Schaftes 10 einer nicht weiter dargestellten Endoskopoptik gezeigt.

Der Schaft 10 besteht aus einem Rohr 11, das an seinem distalen Ende mit einer Klarglasscheibe 12 dampf- und flüssigkeitsdicht nach außen verschlossen ist. Proximal zu der Scheibe ist ein Objektiv 13 mit zwei optischen Linsen vorgesehen.

Das vom Objektiv 13 erzeugte Bild wird mittels einer Bildübertragungseinrichtung bestehend aus mehreren optischen Elementen 14, 15 und 16 zum proximalen Ende des Schaftes 10 übertragen, wobei mit 14 eine bikonvexe stablinsenförmige Verbundlinse aus zwei plankonvexen Linsen 14a und 14b, mit 16 eine bikonvexe Stablinse und mit 15 eine zur Fehlerkompensation dienende optische Korrekturlinse bezeichnet ist.

Die Linsen 14, 15 und 16 sind mit geringem Spiel in das Rohr 11 eingesetzt und werden darin durch Distanzringe 17, 18 und 19 in der gewünschten Position gehalten.

Die Linse 14a und die Stablinse 16, die aufgrund ihres Dicke-Durchmesser Verhältnisses besonders bruchgefährdet sind, sind erfindungsgemäß aus Saphir hergestellt, während die Linsen 14b und 15 aus einem anderen optischen Glas bestehen. Dies ist in der Abbildung durch Punktierung der Linsen 14a und 16 angedeutet.

Der gezeigte Aufbau soll nur einige der unterschiedlichen möglichen Ausführungen zeigen und erfindungsgemäße Endoskopoptiken können abweichend von der Abbildung auch anders aufgebaut sein.

So können z.B. die Linse 14b und die Linse 15 alternativ zur Kompensation vorgesehen werden und müssen nicht wie gezeigt beide gemeinsam in einer Bildübertragungseinrichtung vorhanden sein.

Denkbar sind auch stablinsenförmige Verbundlinsen aus zwei plankonvexen Linsen herzustellen, die beide aus Saphir bestehen. Der Vorteil hierbei wäre, daß sich plankovexe Linsen aus Saphir leichter herstellen lassen als einstückige bikonvexe Stablinsen. Generell sollten stablinsenförmige Verbundlinsen, um optische Fehler im Verbindungsbereich, z.B. im Klebebereich, zu minimieren, aus einer Linse mit hoher Dicke und einer demgegenüber deutlich dünneren Linse aufgebaut sein.

## Patentansprüche

1. Endoskopoptik mit einem starren Schaft, in dessen distalem Endbereich ein Objektiv und in dem weiterhin eine Bildübertragungseinrichtung vorgesehen ist, die zur Übertragung zwischen dem distalen Objektiv und einer im proximalen Bereich der Endoskopoptik vorgesehenen Bildbetrachtungseinrichtung dient, wobei die Bildübertragungseinrichtung aus mehreren im Schaft beabstandet zu einander angeordneten optischen Linsen besteht, **dadurch gekennzeichnet, daß** mindestens eine der Linsen (14, 16) der Bildübertragungseinrichtung aus Saphir besteht.

2. Endoskopoptik nach Anspruch 1, **dadurch gekennzeichnet, daß** die Bildübertragungseinrichtung mehrere Stablinsen (14, 16) aufweist.

3. Endoskopoptik nach Anspruch 1 oder 2, **dadurch gekennzeichnet, daß** mindestens eine der Linsen der Bildübertragungseinrichtung eine bikonvexe Verbundlinse (14) ist, die zwei plankonvexe Linsen (14a, 14b) enthält, von denen mindestens die eine (14a) aus Saphir besteht.
